# EUROPEAN PATENT APPLICATION

(11) **EP 3 637 350 A1**
(43) Date of publication of application: **15.04.2020**
(21) Application number: 19200727.6
(22) Date of filing: 01.10.2019
(51) Int. Cl.: G06Q 30/02, G06Q 20/34

(54) **SYSTEM AND METHOD FOR PREDICTING FUTURE PURCHASES BASED ON PAYMENT INSTRUMENTS USED**

(30) Priority: 01.10.2018 US 201816148051
(71) Applicant: Visa International Service Association, San Francisco, CA 94128-8999 (US)
(72) Inventor: BHASIN, Gurpreet Singh, San Francisco, CA 94128-8999 (US)
(74) Representative: EIP

(57) **Abstract**

Transaction data corresponding to payment devices used on a single payment network system across a plurality of merchants may be analyzed to predict future purchases for each payment device user. A payment instrument fingerprint may be generated to identify use of a particular payment device across many merchants. A model for purchase behavior may be completed based on past purchases across all payment devices corresponding to the single payment network. The model may then be used to determine a probability that a user will make a specific, future purchase following a present purchase.

## Description

### BACKGROUND

Smaller online retailers and digital commerce providers lack the ability to know what a consumer might buy in the future based on past behavior. While several large online retailers have enough data in the immense number of transactions they handle to build a consumer model, smaller businesses do not. While credit card issuers (i.e., banks, etc.) are able to analyze transactions across multiple merchants, their dataset is limited to only the cards that they issue. Current methods employed by social media and other online platforms are intrusive to consumer privacy and rely on tracking the consumer's online presence using cookies, ad-trackers, and other methods across a spectrum of online activity. In addition to being intrusive, the data gathered by these platforms is often ineffective since they cannot track actual purchases, only browser activity.

### SUMMARY

In some embodiments, a computer-implemented method may determine a probability of specific future purchases by a consumer. The method may predict a future transaction for a first payment device based on global transaction data for payment devices associated with a payment network system. The method may store product data and transaction data corresponding to a plurality of purchase transactions for a plurality of products of the product data. The transaction data may correspond to purchase transactions between a plurality of customer computer systems and a plurality of merchant computer systems. The method may also generate payment instrument fingerprints that identify each unique user corresponding to a payment device used for the plurality of purchase transactions. Then, the method may receive first purchase transaction data for a first purchase transaction using the first payment device at a merchant computer system, the first purchase transaction data including a first payment instrument fingerprint and a first product identification for a first product of the plurality of products and determine prediction data for the first payment instrument fingerprint. The prediction data may include a probability that a second product identification for a second product of the plurality of products corresponds to the first payment instrument fingerprint in a second purchase transaction subsequent to the first purchase transaction.

In further embodiments, a system may predict a future transaction for a first payment device based on global transaction data for payment devices associated with a payment network system. The system may include a processor and memory hosting a purchase prediction system, and a database coupled to the processor and the memory. The database may store product data and transaction data corresponding to a plurality of purchase transactions for a plurality of products of the product data. The transaction data may correspond to purchase transactions between a plurality of customer computer systems and a plurality of merchant computer systems. The memory may include instructions that are executable by the processor. The instructions may include generating payment instrument fingerprints that identify each unique user corresponding to a payment device used for the plurality of purchase transactions and receiving first purchase transaction data for a first purchase transaction using the first payment device at a merchant computer system. The first purchase transaction data may include a first payment instrument fingerprint and a first product identification for a first product of the plurality of products. The instructions may also include determining prediction data for the first payment instrument fingerprint. The prediction data may include a probability that a second product identification for a second product of the plurality of products corresponds to the first payment instrument fingerprint in a second purchase transaction subsequent to the first purchase transaction.

### BRIEF DESCRIPTION OF THE FIGURES

The invention may be better understood by references to the detailed description when considered in connection with the accompanying drawings. The components in the figures are not necessarily to scale, emphasis instead being placed upon illustrating the principles of the invention. In the figures, like reference numerals designate corresponding parts throughout the different views.
Fig. 1 shows an illustration of an exemplary system for predicting future purchases based on payment device use across several merchants and issuers;
Fig. 2A shows a first view of an exemplary payment device for use with the system of Fig. 1;
Fig. 2B shows a second view of an exemplary payment device for use with the system of Fig. 1;
Fig. 3 shows an exemplary machine learning architecture;
Fig. 4 shows an exemplary artificial intelligence architecture;
Fig. 5 is a flowchart of a method for predicting future purchases based on payment device use across several merchants and issuers using the system of Fig. 1; and
Fig. 6 shows an exemplary computing device that may be physically configured to execute the methods and include the various components described herein.

Persons of ordinary skill in the art will appreciate that elements in the figures are illustrated for simplicity and clarity so not all connections and options have been shown to avoid obscuring the inventive aspects. For example, common but well-understood elements that are useful or necessary in a commercially feasible embodiment are not often depicted in order to facilitate a less obstructed view of these various embodiments of the present disclosure. It will be further appreciated that certain actions and/or steps may be described or depicted in a particular order of occurrence while those skilled in the art will understand that such specificity with respect to sequence is not actually required. It will also be understood that the terms and expressions used herein are to be defined with respect to their corresponding respective areas of inquiry and study except where specific meanings have otherwise been set forth herein.

### DETAILED DESCRIPTION

The present invention now will be described more fully with reference to the accompanying drawings, which form a part hereof, and which show, by way of illustration, specific exemplary embodiments by which the invention may be practiced. These illustrations and exemplary embodiments are presented with the understanding that the present disclosure is an exemplification of the principles of one or more inventions and is not intended to limit any one of the inventions to the embodiments illustrated. The invention may be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods, systems, computer readable media, apparatuses, components, or devices. Accordingly, the present invention may take the form of an entirely hardware embodiment, an entirely software embodiment, or an embodiment combining software and hardware aspects. The following detailed description is, therefore, not to be taken in a limiting sense.

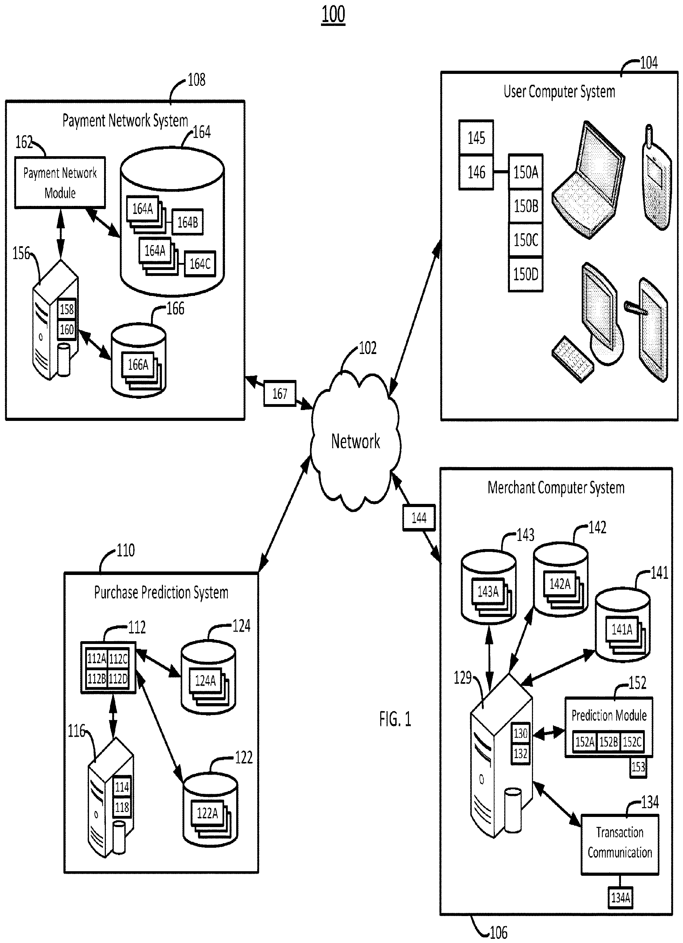

Fig. 1 generally illustrates one embodiment of a payment system 100 for predicting future purchases based on a consumer's payment device use across several merchants and issuers. The system 100 may include a computer network 102 that links one or more systems and computer components. In some embodiments, the system 100 includes a user computer system 104, a merchant computer system 106, a payment network system 108, and a purchase prediction system 110.

The network 102 may be described variously as a communication link, computer network, internet connection, etc. The system 100 may include various software or computer-executable instructions or components stored on tangible memories and specialized hardware components or modules that employ the software and instructions to identify related transaction nodes for a plurality of transactions by monitoring transaction communications between users and merchants.

The various modules may be implemented as computer-readable storage memories containing computer-readable instructions (i.e., software) for execution by one or more processors of the system 100 within a specialized or unique computing device. The modules may perform the various tasks, methods, blocks, sub-modules, etc., as described herein. The system 100 may also include both hardware and software applications, as well as various data communications channels for communicating data between the various specialized and unique hardware and software components.

Networks are commonly thought to comprise the interconnection and interoperation of hardware, data, and other entities. A computer network, or data network, is a digital telecommunications network which allows nodes to share resources. In computer networks, computing devices exchange data with each other using connections, *i.e.,* data links, between nodes. Hardware networks, for example, may include clients, servers, and intermediary nodes in a graph topology. In a similar fashion, data networks may include data nodes in a graph topology where each node includes related or linked information, software methods, and other data. It should be noted that the term "server" as used throughout this application refers generally to a computer, other device, program, or combination thereof that processes and responds to the requests of remote users across a communications network. Servers serve their information to requesting "clients." The term "client" as used herein refers generally to a computer, program, other device, user and/or combination thereof that is capable of processing and making requests and obtaining and processing any responses from servers across a communications or data network. A computer, other device, set of related data, program, or combination thereof that facilitates, processes information and requests, and/or furthers the passage of information from a source user to a destination user is commonly referred to as a "node." Networks generally facilitate the transfer of information from source points to destinations. A node specifically tasked with furthering the passage of information from a source to a destination is commonly called a "router." There are many forms of networks such as Local Area Networks (LANs), Pico networks, Wide Area Networks (WANs), Wireless Networks (WLANs), etc. For example, the Internet is generally accepted as being an interconnection of a multitude of networks whereby remote clients and servers may access and interoperate with one another.

A user computer system 104 may include a processor 145 and memory 146. The user computing system 104 may include a server, a mobile computing device, a smartphone, a tablet computer, a Wi-Fi-enabled device or other personal computing device capable of wireless or wired communication, a thin client, or other known type of computing device. The memory 146 may include various modules including instructions that, when executed by the processor 145 control the functions of the user computer system generally and integrate the user computer system 104 into the system 100 in particular. For example, some modules may include an operating system 150A, a browser module 150B, a communication module 150C, and an electronic wallet module 150D. In some embodiments, the electronic wallet module 150D and its functions described herein may be incorporated as one or more modules of the user computer system 104. In other embodiments, the electronic wallet module 150D and its functions described herein may be incorporated as one or more sub-modules of the payment network system 108.

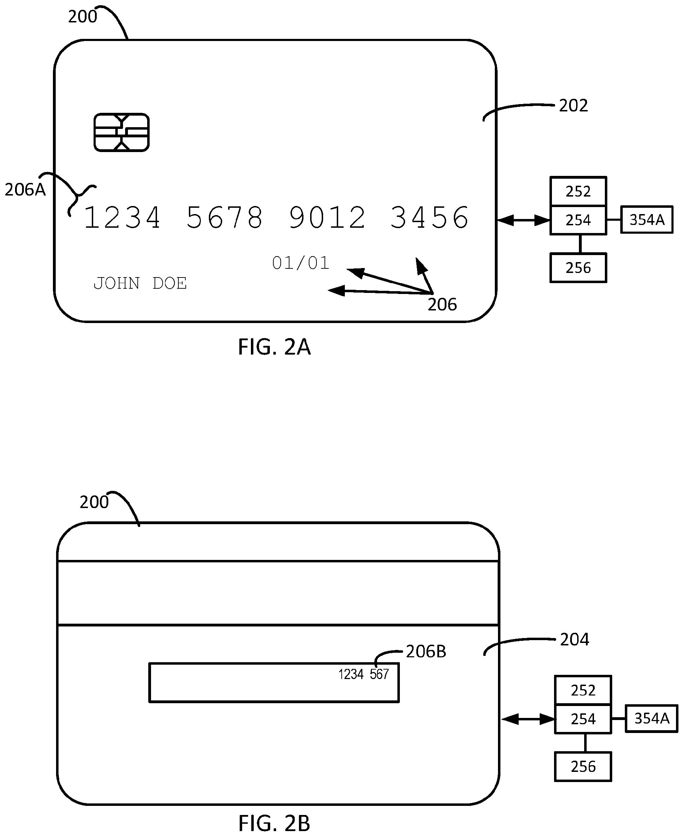

In some embodiments, a module of the user computer system 104 may pass user payment data to other components of the system 100 to facilitate completing an electronic purchase transaction with a payment device 200 (Fig. 2) and/or an electronic wallet module 150D. For example, one or more of the operating system 150A, a browser module 150B, a communication module 150C, and an electronic wallet module 150D may pass data to a merchant computer system 106 and/or to the payment network system 108 to facilitate a payment transaction for a good or service. Data passed from the user computer system 104 to other components of the system may include a customer first and last name, a customer ID (e.g., a Personal Account Number or "PAN"), billing address, current location, and other data.

The merchant computer system 106 may include a computing device such as a merchant server 129 including a processor 130 and memory 132 including components to facilitate transactions with the user computer system 104 and/or a payment device 200 (Fig. 2) via other entities of the system 100. In some embodiments, the memory 132 may include a transaction communication module 134. The transaction communication module 134 may include instructions to send merchant messages 134A to other entities (e.g., 104, 108, 110) of the system 100 to indicate a transaction has been initiated with the user computer system 104 and/or payment device 200 including payment device data and other data as herein described. The merchant computer system 106 may include a merchant transaction repository 142 and instructions to store payment and other merchant transaction data 142A within the transaction repository 142. The merchant transaction data 142A may only correspond to transactions for products with the particular merchant or group of merchants having a merchant profile (e.g., 164B, 164C) at the payment network system 108.

The merchant computer system 106 may also include a product repository 143 and instructions to store product data 143A within the product repository 143. For each product offered by the merchant computer system 106, the product data 143A may include a product name, a product UPC code, an item description, an item category, an item price, a number of units sold at a given price, a merchant ID, a merchant location, a customer location, a calendar week, a date, a historical price of the product, and other information related to the product. In some embodiments, the merchant computer system 106 may send merchant payment data corresponding to a payment device 200 (Fig. 2) to the payment network system 108 or other entities of the system 100, or receive user payment data from the user computer system 104 in an electronic wallet-based or other computer-based transaction between the user computer system 104 and the merchant computer system 106.

The merchant computer system 106 may also include a merchant purchase prediction module 152 having instructions to facilitate predicting future purchases of a customer for a good or service offered by the merchant computer system 106 to the user computer system 104. In some embodiments, the merchant purchase prediction module 152 may communicate with one or more of the payment network system 108 and the purchase prediction system 110 to receive prediction data 144 from a backend system (e.g., the purchase prediction system 110) or to determine the prediction data 144 locally at the merchant computer system 106 via the merchant purchase prediction module 152 and a prediction API 152A. The prediction API 152A may include instructions to access one or more backend components (e.g., the payment network system 108, the purchase prediction system 110, etc.) and/or the local merchant purchase prediction module 152 to configure a prediction graphical interface 152B to dynamically present and apply the prediction data 144 to products 143A offered by the merchant computer system 106 to particular users and particular user computer systems 104. A merchant user identification module 152C may include instructions to generate a user ID 141A specific to the merchant computer system 106 to associate with a user computer system 104 for each transaction of the transaction data 142A. The merchant computer system 106 may store the user ID 141A within a user ID repository 141.

The user ID 141A and the prediction data 144 may be used by instructions of the prediction API 152A or other modules of the merchant computer system 106. The prediction API 152A may use the user ID 141A to associate a logged-in user computer system 104 when the merchant transaction data repository 142 does not include merchant transaction data 142A for the payment device 200 the logged-in user computer system 104 presents with a transaction. The prediction API 152A may also use the user ID 141A to associate the logged-in user computer system 104 when the user computer system 104 presents third-party payment data (e.g., PayPal®, Zelle®, etc.) where the merchant computer system 106 may not have direct access to payment data corresponding to the logged-in user. The purchase prediction module 152 may also include instructions to continuously upload the merchant transaction data 142A to the purchase prediction system 110 to receive immediate prediction data 144 for a user's second purchase based on the user's first purchase, or to periodically upload the data 142A and receive delayed or periodic prediction data 144.

With brief reference to Figs. 2A and 2B, an exemplary payment device 200 may take on a variety of shapes and forms. In some embodiments, the payment device 200 is a traditional card such as a debit card or credit card. In other embodiments, the payment device 200 may be a fob on a key chain, an NFC wearable, or other device. In other embodiments, the payment device 200 may be an electronic wallet where one account from a plurality of accounts previously stored in the wallet is selected and communicated to the system 100 to execute the transaction. As long as the payment device 200 is able to communicate securely with the system 100 and its components, the form of the payment device 200 may not be especially critical and may be a design choice. For example, many legacy payment devices may have to be read by a magnetic stripe reader and thus, the payment device 200 may have to be sized to fit through a magnetic card reader. In other examples, the payment device 200 may communicate through near field communication and the form of the payment device 200 may be virtually any form. Of course, other forms may be possible based on the use of the card, the type of reader being used, etc.

Physically, the payment device 200 may be a card and the card may have a plurality of layers to contain the various elements that make up the payment device 200. In one embodiment, the payment device 200 may have a substantially flat front surface 202 and a substantially flat back surface 204 opposite the front surface 202. Logically, in some embodiments, the surfaces 202, 204 may have some embossments 206 or other forms of legible writing including a personal account number (PAN) 206A and the card verification number (CVN) 206B. In some embodiments, the payment device 200 may include data corresponding to the primary account holder, such as payment network account data 164A for the account holder. A memory 254 generally and a module 254A in particular may be encrypted such that all data related to payment is secure from unwanted third parties. A communication interface 256 may include instructions to facilitate sending payment data 143B, 143A such as a payment payload, a payment token, or other data to identify payment information to one or more components of the system 100 via the network 102.

Returning to Fig. 1, the payment network system 108 may include a payment server including a processor 158 and memory 160. The memory 160 may include a payment network module 162 including instructions to facilitate payment between parties (e.g., one or more users, merchants, etc.) using the payment system 100. The module 162 may be communicably connected to an account holder data repository 164 including payment network account data 164A. The payment network account data 164A may include any data to facilitate payment and other funds transfers between system entities (e.g., 104, 106). For example, the payment network account data 164A may include account identification data, account history data, payment device data, etc. The module 162 may also be communicably connected to a payment network system transaction repository 166 including payment network system global transaction data 166A. The global transaction data 166A may include any data corresponding to a transaction employing the system 100 and a payment device 200 (Fig. 2) that may only be used with the payment network system 108. For example, the global transaction data 166A may include, for each transaction across a plurality of merchants, each having a merchant profile 164B, 164C, data related to a payment or other transaction using a personal account number (PAN), account identification data, a product name, a product UPC code, an item description, an item category, an item price, a number of units sold at a given price, a merchant ID, a merchant location, a customer location, a calendar week, and a date, corresponding to the product data 143A for the product that was the subject of the transaction. The module 162 may also include instructions to send payment messages 167 to other entities and components of the system 100 in order to complete transactions between users of the user computer system 104 and merchants of the merchant computer system 106 who are both account holders within the payment network system 108.

The purchase prediction system 110 may include one or more instruction modules including a purchase prediction module 112 that, generally, may include instructions to cause a processor 114 of a purchase prediction server 116 to functionally communicate with a plurality of other computer-executable steps or sub-modules, e.g., sub-modules 112A, 112B, 112C, 112D and components of the system 100 via the network 102. These modules 112A, 112B, 112C, 112D may include instructions that, upon loading into the server memory 118 and execution by one or more computer processors 114, dynamically determine a probability of a future purchase of a particular product by a user. The payment network system transaction repository 166 may store payment network system global transaction data 166A accessible to the purchase prediction module 112 and submodules 112A, 112B, 112C, and 112D.

A payment instrument fingerprint (PIF) module 112A may include instructions to generate a PIF 122A for each user (e.g., each user computer system 104) based on transaction data 142A, 166A, that uniquely identifies a user corresponding to a payment device. In some embodiments, the PIF module 112A may generate a PIF 122A by combining a plurality of metrics from the global transaction data 166A and/or the merchant transaction data 142A. For example, a PIF 122A may include a user first name, a user last name, and a user billing code such as a zip code or postal code. The PIF module 112A may include instructions to generate the PIF 122A such as instructions to generate a hash value of the transaction data metrics (i.e., the user first name, the user last name, and the user billing code) and to store the PIF 122A in the PIF repository 122.

A user ID collator module 112B may include instructions to match a user ID 141A to payment network account data 164A for the user.

A profile matcher and generator module 112C may include instructions to match input from both the payment instrument fingerprint (PIF) module 112A and the user ID collator module 112B to find transaction data 142A, 166A and/or payment network account data 164A corresponding to a user. The module 112C may also include instructions to generate payment network account data 164A for a user indicated by the input if no data 164A for the user exists within the account holder data repository 164.

A purchase prediction engine 112D may include instructions to calculate probabilities of any given user's future purchase based on matching payment network account data 164A for the user and payment network system global transaction data 166A corresponding to a first user's transactions with existing purchases of second users (e.g., payment network system global transaction data 166A corresponding to other users) with similar purchase histories. In some embodiments, the purchase prediction engine 112D instructions to calculate probabilities may include instructions to implement machine learning (ML) or artificial intelligence (Al) techniques to continuously or periodically refine the probabilities of a first user's future purchases based on the first user's current purchase(s) and matching them to previous purchases (e.g., payment network system global transaction data 166A corresponding to the first user).

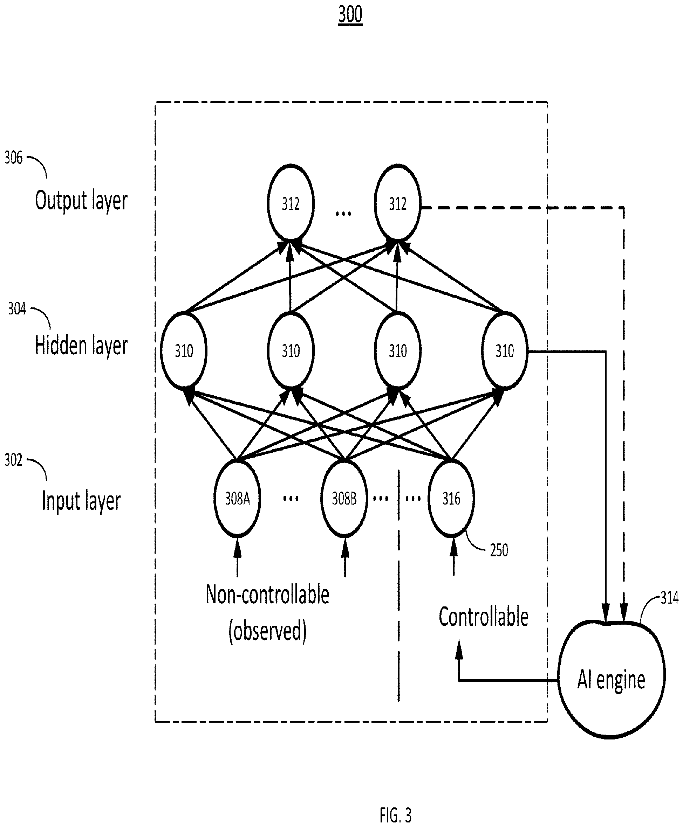

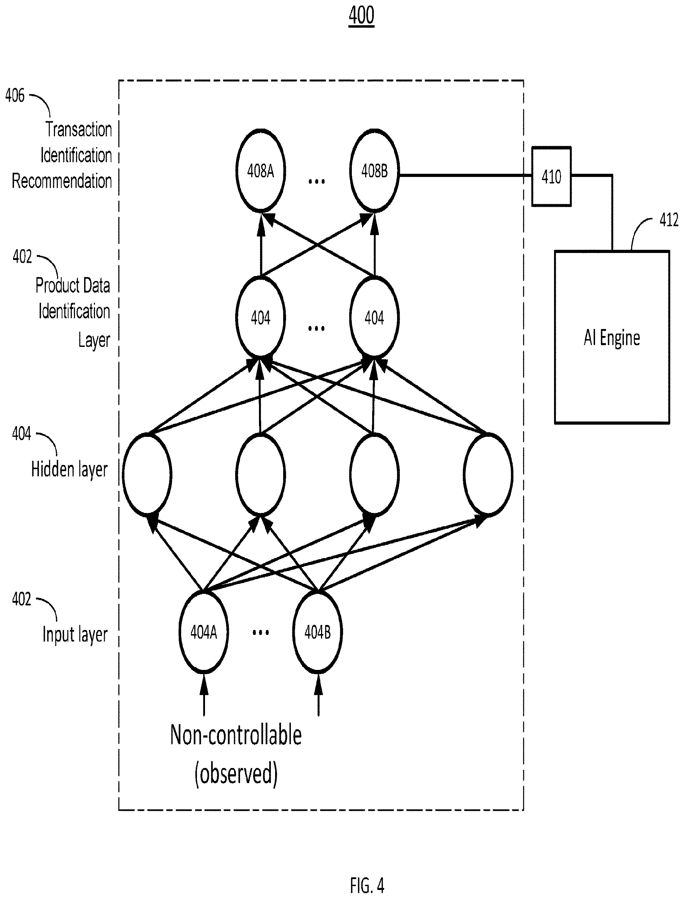

In some embodiments, the ML/AI techniques of the purchase prediction engine 112D may include instructions to implement supervised ML/AI techniques (Figs. 3 and 4) that output a purchase prediction element 124A and store the element 124A in a purchase prediction element repository 124. The purchase prediction engine 112D may also include instructions to send the element 124A or to the merchant computer system as prediction data 144. The purchase prediction element may include various data that the merchant may use to market or present products to a customer for future purchase transactions. In some embodiments, the purchase prediction element 124A and prediction data 144 may include a global trade item number (GTIN) to uniquely identify a product or service. The purchase prediction element 124A and prediction data 144 may also include a probability value between 0 and 100 that denotes a likelihood of a future purchase of the item identified by the GTIN, with 0 being no chance of purchase and 100 being an assured purchase. The purchase prediction element 124A and prediction data 144 may also include a timeline or epoch time from query time indicating when the purchase of the item identified by the GTIN is most likely or imminent based on the probability value and time of the first transaction. In other words, when a second purchase transaction subsequent to a first purchase transaction will occur relative to the first purchase transaction.

With reference to Fig. 3, a machine learning (ML) architecture 300 may be used with the prediction module 112 of system 100 in accordance with the current disclosure. In some embodiments, the purchase prediction engine 112D of the merchant purchase prediction module 112 may include instructions for execution on the processor 114 that implement the ML architecture 300. The ML architecture 300 may include an input layer 302, a hidden layer 304, and an output layer 306. The input layer 302 may include inputs 308A, 308B, etc., coupled to the prediction module 112 and represent those inputs that are observed from actual product, customer, and merchant data in the transaction data 142A, 166A. The hidden layer 304 may include weighted nodes 310 that have been trained for the transactions being observed. Each node 310 of the hidden layer 304 may receive the sum of all inputs 308A, 308B, etc., multiplied by a corresponding weight. The output layer 306 may present various outcomes 312 based on the input values 308A, 308B, etc., and the weighting of the hidden layer 304. Just as a machine learning system for a self-driving car may be trained to determine hazard avoidance actions based on received visual input, the machine learning architecture 300 may be trained to analyze a likely outcome for a given set of inputs based on thousands or even millions of observations of previous customer/merchant transactions. For example, the architecture 300 may be trained to determine a purchase prediction element 124A or prediction data 144 to be associated with the product data 143A.

During training of the machine learning architecture 300, a dataset of inputs may be applied and the weights of the hidden layer 310 may be adjusted for the known outcome (e.g., an actual second transaction following a first transaction) associated with that dataset. As more datasets are applied, the weighting accuracy may improve so that the outcome prediction is constantly refined to a more accurate result. In this case, the merchant transaction repository 142 and/or the payment network system repository 166 respectively including transaction data 142A and 166A may provide datasets for initial training and ongoing refining of the machine learning architecture 300.

Additional training of the machine learning architecture 300 may include an artificial intelligence engine (Al engine) 314 (i.e., the purchase prediction engine 112D) providing additional values to one or more controllable inputs 316 so that outcomes may be observed for particular changes to the transaction data 142A and 166A. The values selected may represent different data types such as selected pricing, time of year, offers, and other alternative data presented at various points in the transaction process with the product data and may be generated at random or by a pseudo-random process. By adding controlled variables to the transaction process, over time, the impact may be measured and fed back into the machine learning architecture 300 weighting to allow capture of an impact on a proposed change to the process in order to optimize the determination of the purchase prediction element 124A and prediction data 144. Over time, the impact of various different data at different points in the transaction cycle may be used to predict an outcome (e.g., product data 143A) for a given set of observed values (e.g., current transaction data) at the inputs layer 302.

After training of the machine learning architecture 300 is completed, data from the hidden layer may be fed to the artificial intelligence engine 314 to generate values for controllable input(s) 316 to optimize the purchase prediction element 124A and prediction data 144. Similarly, data from the output layer may be fed back into the artificial intelligence engine 314 so that the artificial intelligence engine 314 may, in some embodiments, iterate with different data to determine via the trained machine learning architecture 300, whether the prediction data 144 is accurate, and other determinations.

With reference to Fig. 4, in other embodiments, the machine learning architecture 300 and artificial intelligence engine 314 may include a second instance of a machine learning architecture 400 and/or an additional node layer may be used. In some embodiments, a product data identification layer 402 may determine an optimum product 404 from observed inputs 404A, 404B. A transaction identification recommendation layer 406 with outputs 408A, 408B, etc., may be used to generate transaction identification recommendations 410 to an artificial intelligence engine 412, which in turn, may modify the purchase prediction element 124A and prediction data 144 when communicating this data via an appropriate SDK.

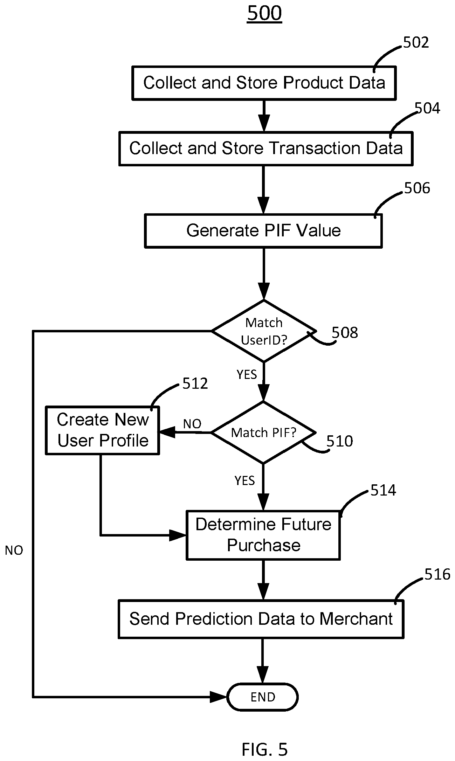

Fig. 5 is a flowchart of a method 500 for determining a purchase prediction element 124A and prediction data 144 for products within an open merchant ecosystem for customers using payment devices 200 from one or more issuers. Each step of the method 500 A is one or more computer-executable instructions performed on a server or other computing device which may be physically configured to execute the different aspects of the method. Each step may include execution of any of the instructions as described in relation to the system 100. While the below blocks are presented as an ordered set, the various steps described may be executed in any particular order to complete the real-time optimal pricing methods described herein.

At block 502, the method 500 may execute instructions to collect and store product data 143A. In some embodiments, the product data 143A may be collected and stored by the merchant computer system 106 as part of digital records for various products offered for sale to the user computer system 104 via the network 102. For each product offered by the merchant computer system 106, the product data 143A may include a product name, a product UPC code, an item description, an item category, an item price, a number of units sold at a given price, a merchant ID, a merchant location, a customer location, a calendar week, a date, a historical price of the product, and other information related to the product.

At block 504, the method 500 may execute instructions to collect and store transaction data 142A, 166A. For example, the merchant computer system 106 may collect and store merchant transaction data 142A for each transaction with that particular merchant. The merchant transaction data 142A may correspond to transactions for products with the particular merchant or group of merchants having a merchant profile (e.g., 164B, 164C) at the payment network system 108. The global transaction data 166A may be a cumulative collection of data across all merchants having payment account data 164A with the payment network system 108. The global transaction data 166A may include any data corresponding to a transaction employing the system 100 and a payment device 200 (Fig. 2). For example, the global transaction data 166A may include, for each transaction across a plurality of merchants, data related to a payment or other transaction using a PAN, account identification data, a product name, a product UPC code, an item description, an item category, an item price, a number of units sold at a given price, a merchant ID, a merchant location, a customer location, a calendar week, and a date, corresponding to the product data 143A for the product that was the subject of the transaction.

At block 506, the method 500 may execute instructions to generate a payment instrument fingerprint (PIF) value 122A. In some embodiments, the method 500 may employ the payment instrument fingerprint (PIF) module 112A using the transaction data (e.g., 142A, 166A) and combining a plurality of metrics from the global transaction data 166A and/or the merchant transaction data 142A. For example, the method 500 may perform a hash of one or more values included in the transaction data 142A, 166A such as the user first name, the user last name, and the user billing code. The method 500 may then store the PIF 122A in a repository 122.

At block 508, the method 500 may execute instructions to determine if a user ID 141A for the user involved in the transaction is included in the repository 141. A match between the user ID 141A indicates that the user has a payment device 200 corresponding to the payment network system 108 and has completed a transaction with this particular merchant. If so, the method 500 may continue.

At block 510, method 500 may execute instructions to match input from both the payment instrument fingerprint (PIF) module 112A and the user ID collator module 112B indicating that the user has a payment device 200 corresponding to the payment network system 108 to find transaction data 142A, 166A and/or payment network account data 164A corresponding to a user.

At block 512, the method 500 may execute instructions to generate payment network account data 164A for a user indicated by the input if no data 164A for the user exists within the account holder data repository 164.

At block 514, the method 500 may execute instructions to determine prediction data 144. In some embodiments, the method 500 may include instructions to calculate probabilities of any given user's future purchase based on matching payment network account data 164A for the user and payment network system global transaction data 166A or merchant transaction data 142A corresponding to a first user's transactions with existing purchases of users (e.g., payment network system global transaction data 166A corresponding to the first user and other users) with similar purchase histories. In other words, the prediction data 144 may be a probability that a first payment instrument fingerprint will correspond to a second product in a second purchase transaction that is subsequent to the first purchase transaction and based on the first payment instrument fingerprint corresponding to a first product as well as purchase histories of other users.

The method 500 may also employ artificial intelligence and machine learning techniques to improve the prediction data 144. For example, the method 500 may use the transaction data 142A, 166A for a user as described in relation to Figs. 1, 3, and 4 as an input to the machine learning architecture 300. One or more of the values associated with the transaction data 142A, 166A described herein may be weighted within the hidden layer 304 to arrive at an output of the prediction data 144 from the architecture 300. The architecture 300 may be trained in this way and coupled with the artificial intelligence architecture 400 to arrive at a probability that the same user will purchase a particular product or service of the merchant.

At block 516, the method may cause the prediction data 144 to be sent to a merchant computing system 106 to configure a prediction graphical interface 152B to dynamically present and apply the prediction data 144 to products 143A offered by the merchant computer system 106 to particular users and particular user computer systems 104. For example, the method 500 may execute instructions to modify the prediction graphical interface 152B based on the user ID 141A and the prediction data 144 to present product data 143A indicated by the prediction data 144 when the user computer system 104 is logged into the merchant computer system 106.

Thus, the present disclosure provides a technical solution to the technical problem of predicting future purchases for a consumer after a first purchase with a merchant based on the analysis of purchase transactions across all merchants utilizing the same type of payment device 200 with the payment network system 108. The systems and methods described herein may analyze historical sales data for each customer/user determine a real-time or periodic probability for the purchase of a future item based on a present sale. This improves the marketing capability of a merchant computer system 106 by utilizing data across thousands of other merchants that employ the same type of payment device corresponding to the payment network system 108. Rather than having to rely on only local transaction data, each merchant may pull from an immense database of transactions to predict a future purchase.

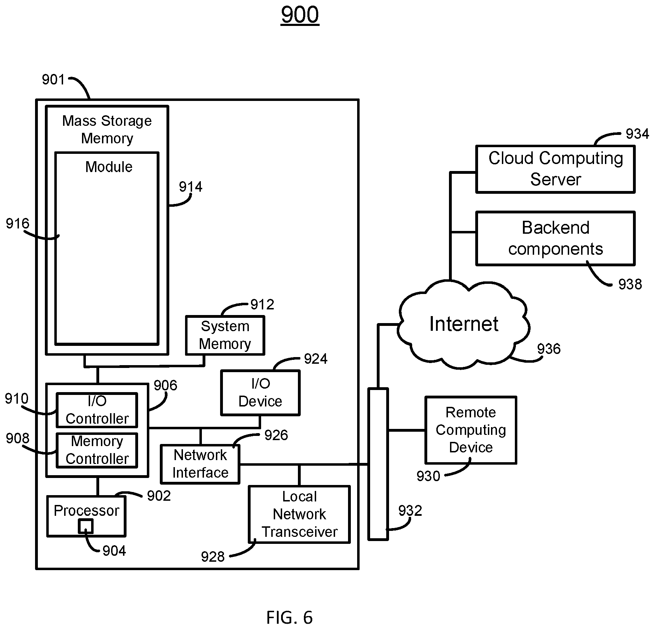

Fig. 6 is a high-level block diagram of an example computing environment 900 for the system 100 and methods (e.g., method 500) as described herein. The computing device 900 may include a server (e.g., the merchant server a, payment server 156, purchase prediction system server 116), a mobile computing device (e.g., user computing system 104), a cellular phone, a tablet computer, a Wi-Fi-enabled device or other personal computing device capable of wireless or wired communication), a thin client, or other known type of computing device.

Logically, the various servers may be designed and built to specifically execute certain tasks. For example, the payment server 156 may receive a large amount of data in a short period of time meaning the payment server may contain a special, high speed input output circuit to handle the large amount of data. Similarly, the purchase prediction system server 116 may execute processor intensive machine learning algorithm and thus the server 116 may have increased processing power that is specially adapted to quickly execute the machine learning algorithms. In yet another example, the merchant server 129 may be under less computing strain than the purchase prediction system server 116 and may have less processing power than the node identification server.

As will be recognized by one skilled in the art, in light of the disclosure and teachings herein, other types of computing devices can be used that have different architectures. Processor systems similar or identical to the example systems and methods described herein may be used to implement and execute the example systems and methods described herein. Although the example system 100 is described below as including a plurality of peripherals, interfaces, chips, memories, etc., one or more of those elements may be omitted from other example processor systems used to implement and execute the example systems and methods. Also, other components may be added.

As shown in Fig. 6, the computing device 901 includes a processor 902 that is coupled to an interconnection bus. The processor 902 includes a register set or register space 904, which is depicted in Fig. 6 as being entirely on-chip, but which could alternatively be located entirely or partially off-chip and directly coupled to the processor 902 via dedicated electrical connections and/or via the interconnection bus. The processor 902 may be any suitable processor, processing unit or microprocessor. Although not shown in Fig. 6, the computing device 901 may be a multi-processor device and, thus, may include one or more additional processors that are identical or similar to the processor 902 and that are communicatively coupled to the interconnection bus.

The processor 902 of Fig. 6 is coupled to a chipset 906, which includes a memory controller 908 and a peripheral input/output (I/O) controller 910. As is well known, a chipset typically provides I/O and memory management functions as well as a plurality of general purpose and/or special purpose registers, timers, etc. that are accessible or used by one or more processors coupled to the chipset 906. The memory controller 908 performs functions that enable the processor 902 (or processors if there are multiple processors) to access a system memory 912 and a mass storage memory 914, that may include either or both of an in-memory cache (e.g., a cache within the memory 912) or an on-disk cache (e.g., a cache within the mass storage memory 914).

The system memory 912 may include any desired type of volatile and/or non-volatile memory such as, for example, static random access memory (SRAM), dynamic random access memory (DRAM), flash memory, read-only memory (ROM), etc. The mass storage memory 914 may include any desired type of mass storage device. For example, the computing device 901 may be used to implement a module 916 (e.g., the various modules as herein described). The mass storage memory 914 may include a hard disk drive, an optical drive, a tape storage device, a solid-state memory (e.g., a flash memory, a RAM memory, etc.), a magnetic memory (e.g., a hard drive), or any other memory suitable for mass storage. As used herein, the terms module, block, function, operation, procedure, routine, step, and method refer to tangible computer program logic or tangible computer executable instructions that provide the specified functionality to the computing device 901, the systems and methods described herein. Thus, a module, block, function, operation, procedure, routine, step, and method can be implemented in hardware, firmware, and/or software. In one embodiment, program modules and routines are stored in mass storage memory 914, loaded into system memory 912, and executed by a processor 902 or can be provided from computer program products that are stored in tangible computer-readable storage mediums (e.g. RAM, hard disk, optical/magnetic media, etc.).

The peripheral I/O controller 910 performs functions that enable the processor 902 to communicate with a peripheral input/output (I/O) device 924, a network interface 926, a local network transceiver 928, (via the network interface 926) via a peripheral I/O bus. The I/O device 924 may be any desired type of I/O device such as, for example, a keyboard, a display (e.g., a liquid crystal display (LCD), a cathode ray tube (CRT) display, etc.), a navigation device (e.g., a mouse, a trackball, a capacitive touch pad, a joystick, etc.), etc. The I/O device 924 may be used with the module 916, etc., to receive data from the transceiver 928, send the data to the components of the system 100, and perform any operations related to the methods as described herein. The local network transceiver 928 may include support for a Wi-Fi network, Bluetooth, Infrared, cellular, or other wireless data transmission protocols. In other embodiments, one element may simultaneously support each of the various wireless protocols employed by the computing device 901. For example, a software-defined radio may be able to support multiple protocols via downloadable instructions. In operation, the computing device 901 may be able to periodically poll for visible wireless network transmitters (both cellular and local network) on a periodic basis. Such polling may be possible even while normal wireless traffic is being supported on the computing device 901. The network interface 926 may be, for example, an Ethernet device, an asynchronous transfer mode (ATM) device, an 802.11 wireless interface device, a DSL modem, a cable modem, a cellular modem, etc., that enables the system 100 to communicate with another computer system having at least the elements described in relation to the system 100.

While the memory controller 908 and the I/O controller 910 are depicted in Fig. 6 as separate functional blocks within the chipset 906, the functions performed by these blocks may be integrated within a single integrated circuit or may be implemented using two or more separate integrated circuits. The computing environment 900 may also implement the module 916 on a remote computing device 930. The remote computing device 930 may communicate with the computing device 901 over an Ethernet link 932. In some embodiments, the module 916 may be retrieved by the computing device 901 from a cloud computing server 934 via the Internet 936. When using the cloud computing server 934, the retrieved module 916 may be programmatically linked with the computing device 901. The module 916 may be a collection of various software platforms including artificial intelligence software and document creation software or may also be a Java® applet executing within a Java® Virtual Machine (JVM) environment resident in the computing device 901 or the remote computing device 930. The module 916 may also be a "plug-in" adapted to execute in a web-browser located on the computing devices 901 and 930. In some embodiments, the module 916 may communicate with back end components 938 via the Internet 936.

The system 900 may include but is not limited to any combination of a LAN, a MAN, a WAN, a mobile, a wired or wireless network, a private network, or a virtual private network. Moreover, while only one remote computing device 930 is illustrated in Fig. 6 to simplify and clarify the description, it is understood that any number of client computers are supported and can be in communication within the system 900.

Additionally, certain embodiments are described herein as including logic or a number of components, modules, or mechanisms. Modules may constitute either software modules (e.g., code or instructions embodied on a machine-readable medium or in a transmission signal, wherein the code is executed by a processor) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "some embodiments" or "an embodiment" or "teaching" means that a particular element, feature, structure, or characteristic described in connection with the embodiment is included in at least one embodiment. The appearances of the phrase "in some embodiments" or "teachings" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

Further, the figures depict preferred embodiments for purposes of illustration only. One skilled in the art will readily recognize from the following discussion that alternative embodiments of the structures and methods illustrated herein may be employed without departing from the principles described herein.

Upon reading this disclosure, those of skill in the art will appreciate still additional alternative structural and functional designs for the systems and methods described herein through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the systems and methods disclosed herein without departing from the scope defined in any appended claims.

## Claims

1. A computer-implemented method of predicting a future transaction for a first payment device based on global transaction data for payment devices associated with a payment network system, the method comprising:
storing product data and transaction data corresponding to a plurality of purchase transactions for a plurality of products of the product data, the transaction data corresponding to purchase transactions between a plurality of customer computer systems and a plurality of merchant computer systems;
generating payment instrument fingerprints that identify each unique user corresponding to a payment device used for the plurality of purchase transactions;
receiving first purchase transaction data for a first purchase transaction using the first payment device at a merchant computer system, the first purchase transaction data including a first payment instrument fingerprint and a first product identification for a first product of the plurality of products; and
determining prediction data for the first payment instrument fingerprint, the prediction data including a probability that a second product identification for a second product of the plurality of products corresponds to the first payment instrument fingerprint in a second purchase transaction subsequent to the first purchase transaction.

2. The method of claim 1, wherein generating the first payment instrument fingerprint includes a hash of at least a user first name, a user last name, and a user billing code.

3. The method of claim 1 or 2, further comprising generating a user identification for each unique user corresponding to a purchase transaction of the plurality of purchase transactions at a merchant computer system of the plurality of merchant computer systems.

4. The method of claim 3, further comprising generating the user identification in response to determining that the user identification does not match transaction data for the first purchase transaction.

5. The method of any of claims 1 to 4, wherein the probability that the second product identification for the second product of the plurality of products corresponds to the first payment instrument fingerprint in the second purchase transaction subsequent to the first purchase transaction is based on the first payment instrument fingerprint corresponding to both the first product and the plurality of purchase transactions for the plurality of products.

6. The method of any of claims 1 to 5, further comprising calculating the probability for each payment instrument fingerprint to correspond to the second product identification.

7. The method of any of claims 1 to 6, wherein determining prediction data for the first payment instrument fingerprint includes weighting a hidden layer of a machine learning architecture with one or more values of the transaction data.

8. The method of any of claims 1 to 7, wherein the transaction data includes one or more of a personal account number (PAN), account identification data, a product name, a product UPC code, an item description, an item category, an item price, a number of units sold at a given price, a merchant ID, a merchant location, a customer location, a calendar week, and a date.

9. The method of any of claims 1 to 8, further comprising modifying a prediction graphical interface at the merchant computer system based on the prediction data.

10. The method of any of claims 1 to 9, wherein the prediction data includes a global trade item number (GTIN) corresponding to the second product identification, a probability value for the probability, and an epoch time indicating when the second purchase transaction will occur relative to the first purchase transaction.

11. A system for predicting a future transaction for a first payment device based on global transaction data for payment devices associated with a payment network system, the system comprising:
a processor and memory hosting a purchase prediction system; and
a database coupled to the processor and the memory, the database storing product data and transaction data corresponding to a plurality of purchase transactions for a plurality of products of the product data, the transaction data corresponding to purchase transactions between a plurality of customer computer systems and a plurality of merchant computer systems;
wherein the memory includes instructions that are executable by the processor for:
generating payment instrument fingerprints that identify each unique user corresponding to a payment device used for the plurality of purchase transactions;
receiving first purchase transaction data for a first purchase transaction using the first payment device at a merchant computer system, the first purchase transaction data including a first payment instrument fingerprint and a first product identification for a first product of the plurality of products; and
determining prediction data for the first payment instrument fingerprint, the prediction data including a probability that a second product identification for a second product of the plurality of products corresponds to the first payment instrument fingerprint in a second purchase transaction subsequent to the first purchase transaction.

12. The system of claim 11, wherein instructions for generating the first payment instrument fingerprint include instructions for generating a hash of at least a user first name, a user last name, and a user billing code.

13. The system of claim 11 or 12, further including instructions for generating a user identification for each unique user corresponding to a purchase transaction of the plurality of purchase transactions at a merchant computer system of the plurality of merchant computer systems.

14. The system of any of claims 11 to 13, further including instructions for generating the user identification in response to determining that the user identification does not match transaction data for the first purchase transaction.

15. The system of any of claims 11 to 14, wherein the probability that the second product identification for the second product of the plurality of products corresponds to the first payment instrument fingerprint in the second purchase transaction subsequent to the first purchase transaction is based on the first payment instrument fingerprint corresponding to both the first product and the plurality of purchase transactions for the plurality of products.

16. The system of any of claims 11 to 15, further including instructions for calculating the probability for each payment instrument fingerprint to correspond to the second product identification.

17. The system of any of claims 11 to 16, wherein instructions for determining prediction data for the first payment instrument fingerprint includes instructions for weighting a hidden layer of a machine learning architecture with one or more values of the transaction data.

18. The system of any of claims 11 to 17, wherein the transaction data includes one or more of a personal account number (PAN), account identification data, a product name, a product UPC code, an item description, an item category, an item price, a number of units sold at a given price, a merchant ID, a merchant location, a customer location, a calendar week, and a date.

19. The system of any of claims 11 to 18, further including instructions for modifying a prediction graphical interface at the merchant computer system based on the prediction data.

20. The system of any of claims 11 to 19, wherein the prediction data includes a global trade item number (GTIN) corresponding to the second product identification, a probability value for the probability, and an epoch time indicating when the second purchase transaction will occur relative to the first purchase transaction.
